# EUROPEAN PATENT APPLICATION

(11) **EP 4 636 044 A1**
(43) Date of publication of application: **22.10.2025**
(21) Application number: 24382392.9
(22) Date of filing: 15.04.2024
(51) Int. Cl.: C09D 5/20

(54) **RAILWAY AXLE AND METHOD FOR REMOVING AN AXLE PROTECTION COATING FROM THE RAILWAY AXLE**

(71) Applicant: Construcciones y Auxiliar de Ferrocarriles, S.A., 20200 Beasain (ES)
(72) Inventor: GALIPIENZO HUGUET, Julio, 20200 Beasain (ES); LASA, Luis, 20200 Beasain (ES); ROCHE BERDEJO, Sandra, 50018 Zaragoza (ES); CHIMINELLI, Agustín, 50018 Zaragoza (ES); IBARZ RIC, Gemma, 50018 Zaragoza (ES)
(74) Representative: Galbaian S.Coop.

(57) **Abstract**

Railway axle (1) and method for removing an axle protection coating (2) from the railway axle (1), wherein the axle protection coating (2) comprises thermoresponsive particles (4) having an activation temperature range wherein thermoresponsive particles (4) damage the coating (2), the axle protection coating (2) having a first adhesive capacity when the thermoresponsive particles (4) are not activated and a second adhesive capacity when the thermoresponsive particles (4) are activated, the second adhesive capacity being less than the first adhesive capacity, so that the axle protection coating (2) is adhered to the surface (3) of the railway axle (1) when the thermoresponsive particles (4) are not activated, and when the thermoresponsive particles (4) are activated, the thermoresponsive particles (4) damage the axle protection coating (2), decreasing the adhesive capacity of the axle protection coating (2) and allowing the removal of the axle protection coating (2) from the surface (3) of the railway axle (1).

## Description

### TECHNICAL FIELD

The present invention relates to a railway axle having an axle protection coating and a method for removing the axle protection coating from the railway axle.

### PRIOR ART

Railway axles are safety-critical elements of the railway vehicle. In service, they are subjected to impacts. These impacts are largely caused by the projection of ballast, which, due to its high energy, can cause indentations that can lead to cracks and to catastrophic breakage of the railway axle. Apart from that, the railway axle can suffer other types of degradations during their lifetime, such as surface rust, or damage due to overloading.

In order to limit these inconveniences, the railway axle is usually protected with an axle protection coating applied onto the surface of the railway axle. For example, railway axle protections, which are classified as class 1 in accordance with EN 13261, can withstand impacts and protect the surface from corrosion. However, in order to guarantee the integrity, the surface of the axle must be inspected at defined intervals, in order to detect possible discontinuities. For this purpose, visual inspection methods and other non-destructive tests such as MT (magnetic particles); ET (Eddy currents) or UT (ultrasounds) are used. The application of these methods can require direct access to the surface of the axle, and therefore, it is necessary to remove the axle protection coating that may interfere with the inspection process.

The removal of the coating is not a simple task because is firmly adhered to the surface of the axle. In order to eliminate the coating, different systems are currently used, such as very highpressure water spraying systems, sand blasting, or the direct machining on a lathe. All these processes require special equipment and are time consuming, aspects that impact on the maintenance cost of the railway axles.

### DISCLOSURE OF THE INVENTION

The object of the invention is to provide a railway axle and a method for removing an axle protection coating from the railway axle, as defined in the claims.

A first aspect of the invention relates to a railway axle comprising an axle protection coating applied onto the surface of the railway axle, wherein the axle protection coating comprises thermoresponsive particles having an activation temperature range wherein the thermoresponsive particles damage the axle protection coating. The axle protection coating having a first adhesive capacity when the thermoresponsive particles are not activated and a second adhesive capacity when the thermoresponsive particles are activated, the second adhesive capacity being less than the first adhesive capacity. So that the axle protection coating is adhered to the surface of the railway axle when the thermoresponsive particles are not activated, and when the thermoresponsive particles are activated within the activation temperature range, the thermoresponsive particles damage the axle protection coating, decreasing the adhesive capacity of the axle protection coating, and allowing the removal of the axle protection coating from the surface of the railway axle.

Another aspect of the invention relates to a method for removing the axle protection coating from the railway axle, wherein the method comprises increasing the temperature of the axle protection coating to activate the thermoresponsive particles of the axle protection coating allowing the removal of the axle protection coating from the surface of the railway axle.

In this way, when the thermoresponsive particles are activated, the particles start to damage the axle protection coating, so the adherence capacity of the coating is reduced, thus facilitating the removal of the coating, saving time and maintenance costs.

### DESCRIPTION OF THE DRAWINGS

Figure 1 shows a section view of a railway axle with an axle protection coating according to an example of the invention.
Figure 2 shows a comparison of the adhesive capacity of an axle protection coating with and without thermoresponsive particles.

### DETAILED DISCLOSURE OF THE INVENTION

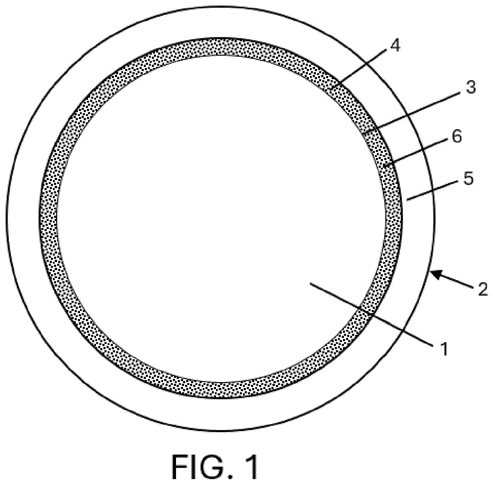

Figure 1 shows an example of a railway axle 1 for a railway vehicle. The railway axle 1 comprises an axle protection coating 2 applied onto the surface 3 of the railway axle 1.

The axle protection coating comprises thermoresponsive particles 4 having an activation temperature range wherein the thermoresponsive particles damage the axle protection coating 2. The axle protection coating having a first adhesive capacity when the thermoresponsive particles 4 are not activated and a second adhesive capacity when the thermoresponsive particles 4 are activated, the second adhesive capacity being less than the first adhesive capacity. So that the axle protection coating 2 is adhered to the surface 3 of the railway axle 1 when the thermoresponsive particles 4 are not activated, and when the thermoresponsive particles 4 are activated within the activation temperature range, the thermoresponsive particles 4 damage the axle protection coating 2, decreasing the adhesive capacity of the axle protection coating 2 and allowing the removal of the axle protection coating 2 from the surface 3 of the railway axle 1.

Preferably, the activation temperature range of the thermoresponsive particles 4 is between 60°C - 300°C. Within said activation temperature range, the thermoresponsive particles may start to damage the axle protection coating 2, so after a predefined time the adherence capacity of the coating 2 is reduced for easy removal of the coating 2. Below 60°C, the thermoresponsive particles are not activated ensuring that the axle protection coating 2 is securely adhered to the railway axle in operating conditions of the railway vehicle. Above 300°C, the temperature may degrade the axle protection coating 2 and/or the structure of the railway axle 1 may be altered, for example, the railway axle 1 may start to break or modify the internal stress distribution.

More preferably, the activation temperature range of the thermoresponsive particles 4 is between 90°C - 250°C. In some special operating conditions, for example in emergency braking, the railway axle 1 may be subjected to a temperature of up to 85°C for a short period of time, so may be advantageous that the particles are not activated below 90°C. In addition, up to 250°C may be a sufficient temperature to achieve adequate particle activation and save energy.

Preferably, the axle protection coating 2 comprises thermoresponsive particles 4 having an activation temperature range wherein the thermoresponsive particles 4 increase their volume damaging the axle protection coating 2. So, when the thermoresponsive particles 4 are within the activation temperature range, the thermoresponsive particles 4 start to increase their volume damaging the axle protection coating 2.

More preferably, the thermoresponsive particles 4 may comprise microspheres having a blowing agent inside the microspheres that can be expandable upon temperature, so the microspheres increase their volume when temperature is applied, damaging the axle protection coating 2 and decreasing the adhesive capacity of the axle protection coating 2.

Other type of particles 4 may be used to damage and thus, decrease the adhesive capacity of the coating 2. For example, alternatively, the axle protection coating 2 may comprise thermoresponsive particles 4 having an activation temperature range wherein the thermoresponsive particles 4 release a chemical for damaging the axle protection coating 2. So, when the thermoresponsive particles 4 are within the activation temperature range, the thermoresponsive particles 4 start to release the chemical agent that damage the coating 2.

The first adhesive capacity of the axle protection coating may be at least 2.5 MPa to maintain the axle protection coating adhered to the surface of the railway axle. So, during operating conditions of the railway vehicle the axle protection coating 2 is securely adhered to the surface 3 of the railway axle 1. The second adhesive capacity of the axle protection coating may be below 1.7 MPa allowing an easier removal of the axle protection coating 2 from the surface of the railway axle. So, when the particles 4 are activated and after a predefined time, the adhesive capacity of the axle protection coating 2 may be reduced below 1.7 MPa.

Preferably, the thermoresponsive particles 4 have a concentration below 60% in weight with respect to the total weight of the axle protection coating 2. More specifically, the particles 4 may have a concentration below 60% in weight with respect to the total dry weight of the axle protection coating 2.

More preferably, the thermoresponsive particles 4 have a particle size between 5-200 microns when the thermoresponsive particles 4 are not activated.

The concentration and particle size of the thermoresponsive particles 4 is specially selected so as to guarantee an adequate adhesion of the axle protection coating 2 to the surface 3 of the railway axle 1 when the thermoresponsive particles 4 are not activated.

Preferably, as shown in the example of Figure 1, the axle protection coating 2 comprises a paint layer 5 and a primer layer 6, the primer layer 6 being arranged onto the surface 3 of the railway axle 1 and the paint layer 5 being arranged onto the primer layer 6, and wherein the thermoresponsive particles 4 are in the primer layer 6. In this example, the activation of the thermoresponsive particles 4 causes a reduction of the adhesion between the primer layer 6 and the surface 3 of the railway axle 1, thus facilitating an easier removal of the paint layer 5. In this example, the paint layer 5 may be a paint commonly used for protecting the axle in the railway sector and the primer layer 6 may be also a primer commonly used in the railway sector but having thermoresponsive particles 4 in the primer.

Preferably, the thermoresponsive particles 4 have a concentration between 1-60% in weight with respect to the total weight of the primer layer 5.

Preferably, the axle protection coating 2 has a thickness of up to 16 mm. More preferably, the primer layer 6 has a thickness from 40 to 80 microns.

Alternatively, the axle protection coating 2 may be a single layer directly applied onto the surface 3 of the railway axle 1.

The axle protection coating 2 may comprise paints or varnishes commonly used in the railway sector to protect the railway axles.

The method for removing the axle protection coating 2 from the railway axle 1 comprises increasing the temperature of the axle protection coating 2 to activate the thermoresponsive particles 4 of the axle protection coating 2 for damaging the axle protection coating 2 and allowing the removal of the axle protection coating 2 from the surface 3 of the railway axle. In this way, after a predefined time, the adherence capacity of the axle protection coating 2 is reduced and the coating 2 can be easily removed with removing tools or even by hand.

Preferably, the axle protection coating 2 is heated at a temperature between 60 °C - 300 °C.

More preferably, the axle protection coating 2 is heated at a temperature between 90 °C - 250 °C.

Specific tests have been executed on a metallic surface to test the adhesive capacity of the axle protection coating on the metallic surface. According to an example, an axle protection coating is applied onto the metallic surface. The axle protection coating has a primer layer with a thickness ranging 40 to 80 microns and a paint layer formed by a specific paint which works as an impact and corrosion protection paint. The primer layer applied onto the metallic surface has a chemical composition based on polyvinyl butyral and comprises commercially available Expancel^{®} 043 DU 80 thermoresponsive particles which are expandable upon applying temperature. Said thermoresponsive particles comprise a blowing agent that may be activated by applying temperature and that provoke the particles to be expanded. The particles have an average particle size ranging 18-24 microns (particle size is measured by Low Angle Laser Light Scattering LALLS). The primer layer contains 10% in weight of particles with respect to the total weight of the primer layer. A temperature of 150°C for a time interval around 30 min is applied to verify the adhesive capacity of the axle protection coating after activation of the particles.

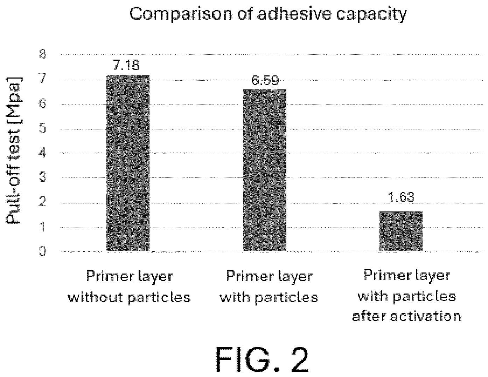

The results obtained are shown in Figure 2. A tensile pull-of test, according to EN ISO 4624, was performed to measure the adherence of the primer layer, where a 20-mm diameter stud has been used to determine the adhesive capacity. The first column corresponds to the adhesive capacity at room temperature of a primer layer without thermoresponsive particles. The second column corresponds to the adhesive capacity at a room temperature of the same primer layer but with the addition of the thermoresponsive particles. The third column shows the adhesive capacity of the previous primer layer after the activation at a temperature of 150°C during 30 min.

From the results, it can be observed that, prior to the activation of the particles, the adhesive capacity of the primer layer provided with particles is modified slightly with respect to the primer layer without particles but keeping its value above the minimum specified. The primer layer without thermoresponsive particles shows an adhesive capacity of 7,18 MPa and the primer layer with thermoresponsive particles shows an adhesive capacity of 6,59 MPa. Once the activation is completed, the adhesive capacity of the primer layer decreases down to 1.63 MPa, which enables an easy removal of the coating.

## Claims

1. Railway axle (1) comprising an axle protection coating (2) applied onto the surface (3) of the railway axle (1), **characterised in that** the axle protection coating (2) comprises thermoresponsive particles (4) having an activation temperature range wherein the thermoresponsive particles (4) damage the axle protection coating (2), the axle protection coating (2) having a first adhesive capacity when the thermoresponsive particles (4) are not activated and a second adhesive capacity when the thermoresponsive particles (4) are activated, the second adhesive capacity being less than the first adhesive capacity, so that the axle protection coating (2) is adhered to the surface (3) of the railway axle (1) when the thermoresponsive particles (4) are not activated, and when the thermoresponsive particles (4) are activated within the activation temperature range, the thermoresponsive particles (4) damage the axle protection coating (2), decreasing the adhesive capacity of the axle protection coating (2) and allowing the removal of the axle protection coating (2) from the surface (3) of the railway axle (1).

2. Railway axle according to claim 1, wherein the activation temperature range of the thermoresponsive particles (4) is between 60 °C - 300 °C.

3. Railway axle according to claim 2, wherein the activation temperature range of the thermoresponsive particles (4) is between 90 °C - 250 °C.

4. Railway axle according to any of the preceding claims, wherein the second adhesive capacity of the axle protection coating (2) is below 1.7 MPa allowing the removal of the axle protection coating (2) from the surface (3) of the railway axle (1).

5. Railway axle according to any of the preceding claims, wherein the first adhesive capacity of the axle protection coating (2) is at least 2.5 MPa to maintain the axle protection coating (2) adhered to the surface (3) of the railway axle (1).

6. Railway axle according to any of the preceding claims, wherein the thermoresponsive particles (4) have a concentration below 60% in weight with respect to the total weight of the axle protection coating (2).

7. Railway axle according to any of the preceding claims, wherein the thermoresponsive particles (4) have a particle size between 5-200 microns when the thermoresponsive particles (4) are not activated.

8. Railway axle according to any of the preceding claims, wherein the axle protection coating (2) comprises a paint layer (5) and a primer layer (6), the primer layer (6) being arranged onto the surface (3) of the railway axle (1) and the paint layer (5) being arranged onto the primer layer (6), and wherein the thermoresponsive particles (4) are in the primer layer (6).

9. Railway axle according to the preceding claim, wherein the thermoresponsive particles (4) have a concentration between 1-60% in weight with respect to the total weight of the primer layer (5).

10. Railway axle according to any of the preceding claims, wherein the axle protection coating (2) has a thickness up to 16 mm.

11. Method for removing an axle protection coating (2) from a railway axle (1) according to any of the preceding claims, wherein the method comprises increasing the temperature of the axle protection coating (2) to activate the thermoresponsive particles (4) of the axle protection coating (2) for damaging the axle protection coating (2) and allowing the removal of the axle protection coating (2) from the surface (3) of the railway axle (1).

12. Method according to the preceding claim, wherein the axle protection coating (2) is heated at a temperature between 60 °C - 300 °C.

13. Method according to the preceding claim, wherein the axle protection coating (2) is heated at a temperature between 90 °C - 250 °C.
